# EUROPÄISCHE PATENTSCHRIFT

(11) **EP 1 137 558 B1**
(45) Veröffentlichungstag und Bekanntmachung des Hinweises auf die Patenterteilung: **04.01.2006**
(21) Anmeldenummer: 00962207.7
(22) Anmeldetag: 05.08.2000
(51) Int. Cl.: B60S 1/34

(54) **VORRICHTUNG ZUM BEFESTIGEN EINES WISCHARMS AUF EINER ANTRIEBSWELLE**
DEVICE FOR FIXING A WIPER ARM ON A DRIVE SHAFT
DISPOSITIF POUR FIXER UN BRAS D'ESSUIE-GLACE SUR UN ARBRE DE COMMANDE

(30) Priorität: 17.08.1999 DE 19938969
(43) Veröffentlichungstag der Anmeldung: 04.10.2001
(73) Patentinhaber: ROBERT BOSCH GMBH, 70442 Stuttgart (DE)
(72) Erfinder: MERKEL, Wilfried, 77876 Kappelrodeck (DE); DAENEN, Roger, B-3770 Vlytingen-Riemst (BE)
(86) Internationale Anmeldenummer: PCT/DE2000/002623
(87) Internationale Veröffentlichungsnummer: WO 2001/012481

(56) Entgegenhaltungen:
- DE-A- 4 408 732
- PATENT ABSTRACTS OF JAPAN vol. 008, no. 016 (M-270), 24. Januar 1984 (1984-01-24) & JP 58 177752 A (NISSAN JIDOSHA KK), 18. Oktober 1983 (1983-10-18)

## Beschreibung

### Stand der Technik

Die Erfindung geht aus von einer Vorrichtung zum Befestigen eines Wischarms auf einer Antriebswelle nach dem Oberbegriff des Anspruchs 1, siehe DE-A-4 408 732.

Wischeranlagen mit mehreren Scheibenwischern für Kraftfahrzeuge werden mit deren Wischerlagern direkt oder indirekt über eine Platine an der Karosserie des Kraftfahrzeugs befestigt. Die Platine trägt einen Wischerantrieb mit einem Wischermotor, dessen Motorwelle über ein Gestänge Kurbeln antreibt, die mit einem Ende einer Antriebswelle für jeden Scheibenwischer fest verbunden sind. Ferner ist möglich, daß nur die Antriebswelle eines Scheibenwischers vom Wischermotor angetrieben wird, während ein anderer Scheibenwischer über ein Viergelenkhebelgetriebe mit dem ersten Scheibenwischer verbunden ist und eine Lagerachse besitzt. Die Antriebswelle bzw. die Lagerachse ist in einem Wischerlager gelagert. Im Folgenden treffen die Ausführungen zu einer Antriebswelle für eine Lagerachse sinngemäß zu, die nicht mehr ausdrücklich genannt wird.

Im Lagergehäuse ist mindestens ein radiales Lager und an den Stirnseiten zwischen dem Lagergehäuse und einem mit der Antriebswelle fest verbundenen Teil ein axiales Lager vorgesehen. Die Antriebswelle ragt aus der Karosserie und bewegt einen an ihrem freien Ende befestigten Wischarm mit einem Wischblatt über eine Windschutzscheibe. Der Wischarm besitzt in der Regel ein mit der Antriebswelle drehfest verbundenes Befestigungsteil, das gelenkig mit einem Gelenkteil verbunden ist, an das sich starr eine Wischstange anschließt. Ferner ist möglich, daß der Wischarm nicht direkt mit der Antriebswelle verbunden ist, sondern über ein Hebelgetriebe mit einem auf der Antriebswelle drehfest verbundenen Antriebshebel angetrieben wird. Die nachfolgenden Ausführungen zur Verbindung des Befestigungsteils mit der Antriebswelle gelten auch für einen Antriebshebel, der nicht mehr ausdrücklich genannt wird.

Bei bekannten Schweibenwischern weist das Befestigungsteil an einem Ende eine Lagerstelle mit einem Innenkonus auf, mit dem das Befestigungsteil bei der Montage des Wischarms in einem ersten Montageschritt auf einen entsprechend geformten Außenkonus der Antriebswelle aufgesetzt wird. Anschließend wird in einem zweiten Montageschritt auf die Antriebswelle eine Mutter geschraubt, über die das Befestigungsteil mit dem Innenkonus auf den Außenkonus der Antriebswelle aufgepreßt wird.
Um zusätzlich zu einem Kraftschluß einen Formschluß zu erreichen, ist bekannt, am Konus der Antriebswelle Rändelzähne bzw. Rändelschneiden anzuformen. Über den Umfang sind je nach Durchmesser der Antriebswelle 29 bis 44 Rändelschneiden angeordnet, die in Längsrichtung der Antriebswelle ausgerichtet sind und eine dreieckige Querschnittsfläche mit einem Winkel von 90° aufweisen. Die Höhe und die Querschnittsfläche der Rändelschneiden nimmt mit zunehmendem Durchmesser des Konus zu, so daß die gesamte Mantelfläche des Konus von Rändelschneiden überdeckt ist.

### Vorteile der Erfindung

Die Erfindung geht aus von einer Vorrichtung zum Befestigen eines Wischarms auf einer Antriebswelle. Ein Befestigungsteil für den Wischarm weist an einem Ende eine Lagerstelle auf, über die das Befestigungsteil über eine auf die Antriebswelle aufschraubbare Mutter mit der Antriebswelle drehfest verbindbar ist, wobei die Mutter über eine bei der Montage des Wischarms lösbare Anbindung mit dem Befestigungsteil verbunden ist. Eine derartige Vorrichtung ist aus der DE-A-4408732 bekannt.

Es wird vorgeschlagen, daß die Mutter von einem an das Befestigungsteil angegossenen Bauteil gebildet ist. Ein zusätzliches Bauteil entfällt und der Lageraufwand, Logistikaufwand und Montageaufwand können reduziert und Kosten gespart werden. Bei einer Anlieferung des Wischarms im vormontierten Zustand ist die Mutter verliersicher mit dem Befestigungsteil verbunden. Eine zusätzliche Vormontage der Mutter am Befestigungsteil wird vermieden. Die Mutter kann durch die Anbindung an verschiedenen Stellen des Befestigungsteils befestigt sein, ist jedoch vorzugsweise oberhalb der Lagerstelle in einer Montagestellung angeordnet, wobei die Anbindung vorzugsweise zwischen der zum Befestigungsteil weisenden Stirnseite der Mutter und dem Befestigungsteil angeformt ist. Die Montage kann besonders schnell und kostengünstig ausgeführt und insbesondere leicht automatisiert werden. Die Mutter kann in der Montagestellung gegriffen und direkt auf eine Antriebswelle aufgeschraubt werden. Die Anbindung wird dabei vorteilhaft von einem dünnwandigen Zylinder gebildet, der fertigungstechnisch einfach angeformt bzw. angegossen werden kann.

In einer Ausgestaltung der Erfindung wird vorgeschlagen, daß das Befestigungsteil mit der Lagerstelle über einen Innenkonus auf einem Außenkonus der Antriebswelle gelagert ist und die Antriebswelle an den Außenkonus angeformte Zähne aufweist, über die neben einem Kraftschluß ein Formschluß zwischen der Antriebswelle und dem Befestigungsteil herstellbar ist, wobei die Höhe der Zähne über der Konusmantelfläche gleichbleibend ist. Die Zähne verformen bei der Montage das Material des Befestigungsteils gleichmäßig. Das Befestigungsteil kann mit einem kleinen Anzugsmoment einer Befestigungsmutter bzw. mit einer kleinen axialen Kraft auf der gesamten Konusmantelfläche der Antriebswelle zum Liegen gebracht werden. Es können kostengünstige Materialien mit geringen Wandstärken verwendet werden. Ferner kann aufgrund des geringen erforderlichen Anzugsmoments besonders vorteilhaft die Befestigungsmutter aus einem kostengünstigen und leichten Material an das Befestigungsteil in einem Verfahrensschritt mit angegossen werden, beispielsweise aus Kunststoff, Zink, Aluminium, Magnesium usw.

Ein nur teilweises Aufliegen des Befestigungsteils auf den Spitzen der Zähne, insbesondere am unteren Bereich des Konus, kann vermieden und der Kraft- und Formschluß zwischen der Antriebswelle und dem Befestigungsteil kann verbessert werden. Ferner können Einlegeteile, insbesondere in Kunststoffbefestigungsteilen, vermieden werden.

Die Zähne können mit verschiedenen, dem Fachmann als geeignet erscheinenden Verfahren angeformt werden, wie beispielsweise durch spanloses Urformen oder Umformen, wie Walzen mit einem Rändelwerkzeug, Fließpressen, Tiefziehen bei aus Blech geformten Bauteilen oder durch spanende Verfahren, wie Fräsen, Räumen usw. Ferner können die Zähne verschiedene Formen aufweisen, wie beispielsweise pyramidenförmig, kegelförmig usw.
In einer Ausgestaltung der Erfindung wird vorgeschlagen, daß die Zähne von im wesentlichen in Längsrichtung ausgerichteten Schneiden gebildet sind, die in Längsrichtung eine gleichbleibende Höhe und vorzugsweise eine gleichbleibende Querschnittsfläche aufweisen. In Längsrichtung ausgerichtete Schneiden können besonders kostengünstig hergestellt werden und bewirken einen guten Formschluß.

Ferner wird vorgeschlagen, daß der Abstand in Umfangsrichtung zwischen jeweils zwei Zähnen auf gleicher axialer Höhe an der Antriebswelle auf die Zugfestigkeit der verwendeten Materialien für die Antriebswelle und für das Befestigungsteil abgestimmt ist und bei abnehmender Zugfestigkeit des Materials für das Befestigungsteil relativ zur Zugfestigkeit des Materials für die Antriebswelle der Abstand zwischen den Zähnen zunimmt.

Die Abscherfestigkeit der Zähne an der Antriebswelle und des zwischen den Zähnen stehenden Materials des Befestigungsteils kann aneinander angeglichen und insgesamt kann bei einem kleinen Anzugsmoment der Befestigungsmutter eine größtmögliche Abscherfestigkeit und ein größtmöglich übertragbares Drehmoment erreicht werden. Bei einem größeren Abstand in Umfangsrichtung können bei gleichbleibendem Durchmesser der Antriebswelle weniger Zähne am Konus angebracht werden. Sind die Zähne an einen Außenkonus einer Antriebswelle aus Stahl mit einem Nenndurchmesser unterhalb des Konus von 8 mm angeformt, die nach DIN eine Oberflächenhärte von mindesten 135 HBS bis 200 HBS aufweist, sind vorteilhaft bei einem Befestigungsteil aus Stahl 30 bis 40 Schneiden, bei einem Befestigungsteil aus Zink oder Aluminium 20 bis 30 Schneiden, bei einem Befestigungsteil aus Magnesium 15 bis 25 Schneiden und bei einem Befestigungsteil aus Kunststoff 5 bis 15 Schneiden über den Umfang der Konusmantelfläche an der Antriebswelle angeformt. Bei Antriebswellen mit einem kleineren oder einem größeren Nenndurchmesser sind entsprechend weniger oder mehr Schneiden über den Umfang angeordnet.

Ferner können durch die Form, Breite und insbesondere durch die Höhe der Zähne die zulässig maximalen Belastungen in Umfangsrichtung der Zähne und des zwischen den Zähnen stehenden Materials des Befestigungsteils aneinander angeglichen und ein insgesamt maximal zulässig übertragbares Drehmoment erreicht werden. Vorteilhaft nimmt bei abnehmender Zugfestigkeit des Materials für das Befestigungsteil relativ zur Zugfestigkeit des Materials für die Antriebswelle die Höhe der Zähne zu.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Ausschnitt einer Wischeranlage mit einem Wischarm im Schnitt,
- Fig. 2: ein Befestigungsteil von oben vor einer ersten Montage,
- Fig. 3: einen Schnitt entlang der Linie III-III in Fig. 2,
- Fig. 4: einen Schnitt entlang der Linie IV-IV in Fig. 1 ohne Befestigungsteil,
- Fig. 5: eine vergrößerte Ansicht einer Antriebswelle von oben und
- Fig. 6: eine Variante nach Fig. 4 für ein Befestigungsteil aus einem Material mit einer geringen Zugfestigkeit.

### Beschreibung der Ausführungsbeispiele

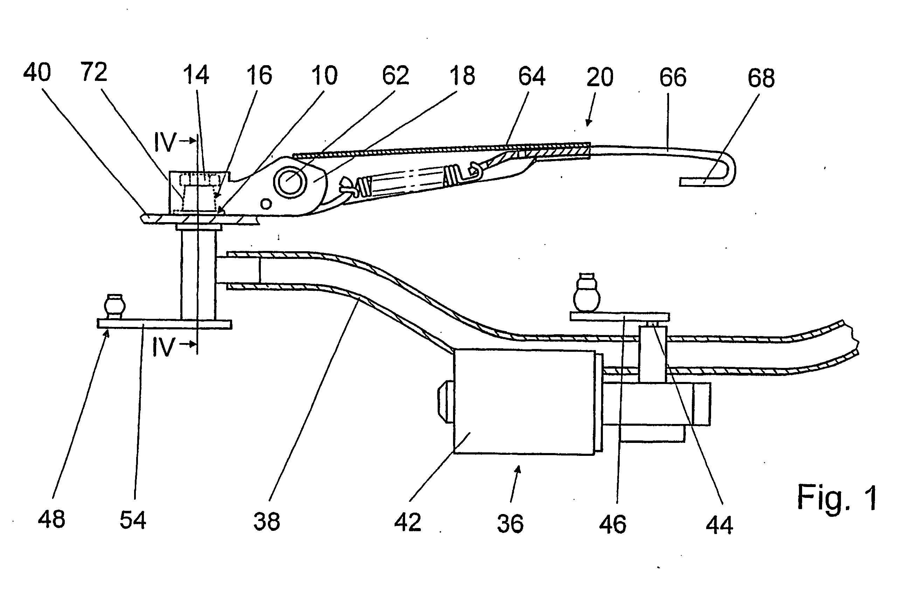

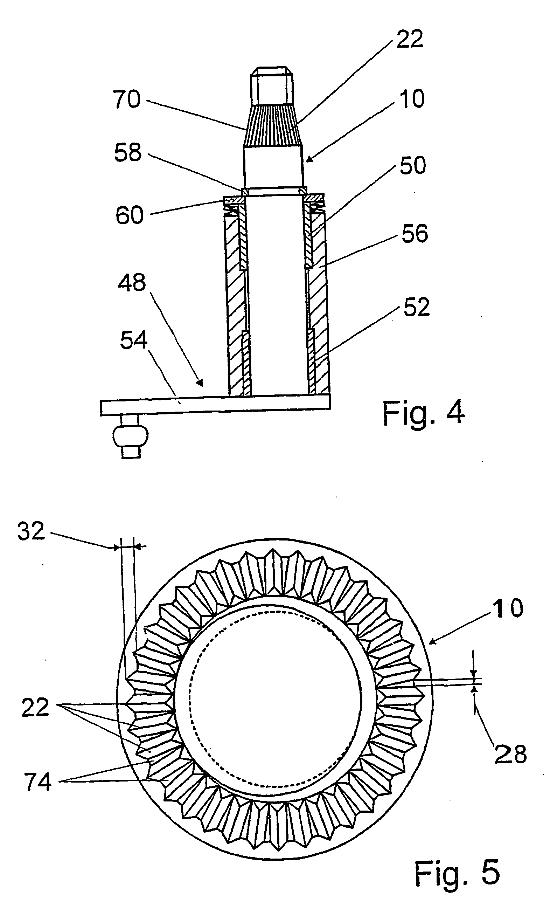

Fig. 1 zeigt einen Ausschnitt einer Wischeranlage 36 für ein Kraftfahrzeug, deren Wischerlager über eine Platine 38 an der Karosserie 40 des Kraftfahrzeugs befestigt sind. Die Platine 38 trägt einen Wischerantrieb mit einem Wischermotor 42, dessen Motorwelle 44 über eine Kurbel 46 und ein nicht näher dargestelltes Gestänge Kurbeln 48 antreibt, die jeweils mit einem Ende einer Antriebswelle 10 für einen Scheibenwischer fest verbunden sind. Die Antriebswelle 10 ist in einem Lagergehäuse 56 des Wischerlagers radial über Lagerbuchsen 50, 52 und in eine erste axiale Richtung über einen Kurbelarm 54 und in eine zweite axiale Richtung über einen Spannring 58 und einen Laufring 60 gelagert (Fig. 4). Die Antriebswelle 10 ragt aus der Karosserie 40 und bewegt einen an ihrem freien Ende befestigten Wischarm 20 mit einem nicht näher dargestellten Wischblatt über eine Windschutzscheibe (Fig. 1). Der Wischarm 20 besitzt ein Befestigungsteil 18, das über ein Kniegelenk 62 gelenkig mit einem Gelenkteil 64 verbunden ist, an das sich starr eine Wischstange 66 anschließt. In die Wischstange 66 wird an einem bügelförmigen Ende 68 das Wischblatt eingehängt. Das Befestigungsteil 18 besitzt an einem Ende eine Lagerstelle 16, über die das Befestigungsteil 18 über eine auf die Antriebswelle 10 aufschraubbare Mutter 14 mit der Antriebswelle 10 drehfest verbindbar ist.

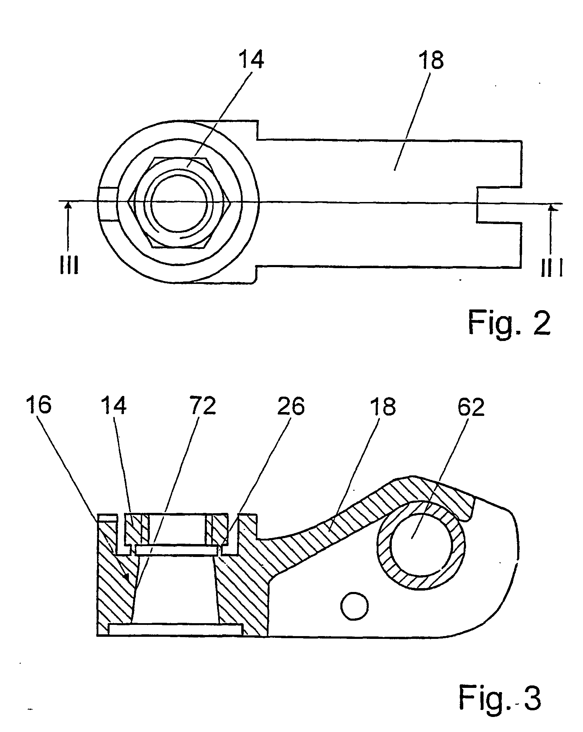

Erfindungsgemäß ist die Mutter 14 von einem an das Befestigungsteil 18 angegossenen Bauteil gebildet und über eine bei der Montage des Wischarms 20 lösbare Anbindung 26 mit dem Befestigungsteil 18 verbunden (Fig. 2 u. 3). Die Mutter 14 ist oberhalb der Lagerstelle 16 in einer Montagestellung angeordnet, wobei die Anbindung 26 zwischen der zum Befestigungsteil 18 weisenden Stirnseite der Mutter 14 und dem Befestigungsteil 18 in der Form eines dünnwandigen Zylinders angeformt ist. Die Anbindung 26 bricht, sobald die Mutter beim Aufdrehen auf die Antriebswelle 10 mit einem Drehmoment belastet wird. Das Befestigungsteil 18 und die Mutter 14 sind in einem Verfahrensschritt aus Aluminium hergestellt, und zwar in einem Druckgußverfahren. Ferner ist möglich, das Befestigungsteil und die Mutter aus Kunststoff, Zink, Magnesium usw. herzustellen.

Die Antriebswelle 10 ist aus einem härteren Material als das Befestigungsteil 18 und besitzt an einem Außenkonus 70 in Wellenlängsrichtung ausgerichtete Zähne bzw. Rändelschneiden 22, die bei der Montage des Befestigungsteils 18 auf der Antriebswelle 10 in eine Mantelfläche eines Innenkonus 72 des Befestigungsteils 18 gedrückt werden und neben einem Kraftschluß einen Formschluß zwischen der Antriebswelle 10 und dem Befestigungsteil 18 herstellen (Fig. 1, 4 u. 5). Vorzugsweise besitzen die Rändelschneiden 22 in Längsrichtung eine gleichbleibende Höhe 32, d.h. vom Zahngrund bis zur Zahnspitze, sind untereinander gleich hoch und besitzen vorzugsweise eine gleichbleibende Querschnittsfläche. Zwischen den Rändelschneiden 22 entstehen dadurch glatte Konusmantelflächen 74.

Bei der Montage wird das Material des Befestigungsteils 18 über die Länge der Rändelschneiden 22 gleichmäßig verformt. Das Befestigungsteil 18 kann mit einem kleinen Anzugsmoment mit der Mutter 14 bzw. mit einer kleinen axialen Kraft auf der gesamten Konusmantelfläche der Antriebswelle 10 zum Liegen gebracht werden. Ein nur teilweises Aufliegen des Befestigungsteils 18 auf den Spitzen der Rändelschneiden 22, insbesondere am unteren Bereich des Außenkonus 70, wird vermieden und es wird ein guter Kraft- und Formschluß zwischen der Antriebswelle 10 und dem Befestigungsteil 18 erreicht.

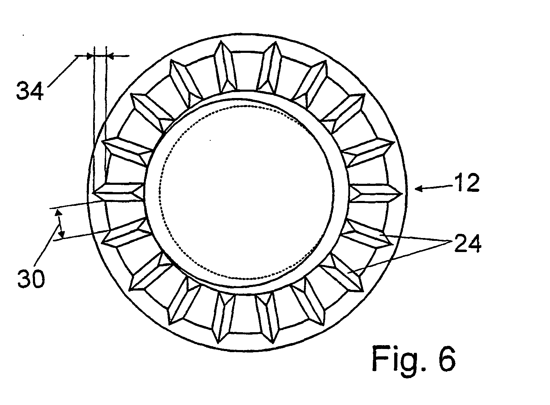

In Fig. 6 ist eine Antriebswelle 12 mit Rändelschneiden 24 für ein Befestigungsteil dargestellt, das aus einem Material mit einer geringeren Zugfestigkeit hergestellt ist als das Befestigungsteil 18, und zwar für ein Befestigungsteil aus Magnesium. Der Abstand 30 zwischen den Rändelschneiden 24 ist größer als der Abstand 28 zwischen den Rändelschneiden 22 im Ausführungsbeispiel in Fig. 5. Es sind bei gleichem Durchmesser der Antriebswellen 10 und 12 weniger Rändelschneiden 24 an der Antriebswelle 12 über den Umfang angeformt. Die Abscherfestigkeit der Rändelschneiden 24 an der Antriebswelle 12 und des zwischen den Rändelschneiden 24 stehenden Materials des Befestigungsteils sind aneinander angeglichen, so daß insgesamt eine größtmögliche Abscherfestigkeit und ein größtmöglich zulässig übertragbares Drehmoment erreicht wird. Um die zulässige maximale Beanspruchung der Rändelschneiden 24 und des Materials zwischen den Rändelschneiden 24 vom Befestigungsteil aneinander anzugleichen, besitzen ferner die Rändelschneiden 24 eine größere Höhe 34 als die Rändelschneiden 22. Wie im Ausführungsbeispiel in Fig. 1 bis 5 besitzen die Rändelschneiden 24 jedoch in Längsrichtung eine gleichbleibende Höhe 34 und eine gleichbleibende Querschnittsfläche.

### Bezugszeichen

- 10: Antriebswelle
- 12: Antriebswelle
- 14: Mutter
- 16: Lagerstelle
- 18: Befestigungsteil
- 20: Wischarm
- 22: Zahn
- 24: Zahn
- 26: Anbindung
- 28: Abstand
- 30: Abstand
- 32: Höhe
- 34: Höhe
- 36: Wischeranlage
- 38: Platine
- 40: Karosserie
- 42: Wischermotor
- 44: Motorwelle
- 46: Kurbel
- 48: Kurbel
- 50: Lagerbuchse
- 52: Lagerbuchse
- 54: Kurbelarm
- 56: Lagergehäuse
- 58: Spannring
- 60: Laufring
- 62: Kniegelenk
- 64: Gelenkteil
- 66: Wischstange
- 68: Ende
- 70: Außenkonus
- 72: Innenkonus
- 74: Konusmantelfläche

## Patentansprüche

1. Vorrichtung zum Befestigen eines Wischarms (20) auf einer Antriebswelle (10, 12), mit einem Befestigungsteil (18) für den Wischarm (20), das an einem Ende eine Lagerstelle (16) besitzt, über die das Befestigungsteil (18) über eine auf die Antriebswelle (10, 12) aufschraubbare Mutter (14) mit der Abtriebswelle (10, 12) drehfest verbindbar ist, wobei die Mutter (14) über eine bei der Montage des Wischarms (20) lösbare Anbindung (26) mit dem Befestigungsteil (18) verbunden ist, **dadurch gekennzeichnet, dass** die Mutter (14) von einem an das Befestigungsteil (18) angegossenen Bauteil gebildet ist.

2. Vorrichtung nach Anspruch 1, **dadurch gekennzeichnet, daß** die Mutter (14) oberhalb der Lagerstelle (16) in einer Montagestellung angeordnet ist.

3. Vorrichtung nach Anspruch 2, **dadurch gekennzeichnet, daß** die Anbindung (26) zwischen der zum Befestigungsteil (18) weisenden Stirnseite der Mutter (14) und dem Befestigungsteil (18) angeformt ist.

4. Vorrichtung nach Anspruch 3, **dadurch gekennzeichnet, daß** die Anbindung (26) von einem dünnwandigen Zylinder gebildet ist.

5. Vorrichtung nach einem der vorhergehenden Ansprüche, **dadurch gekennzeichnet, daß** das Befestigungsteil (18) mit der Lagerstelle (16) über einen Innenkonus (72) auf einem Außenkonus (70) der Antriebswelle (10, 12) gelagert ist und die Antriebswelle (10, 12) an den Außenkonus (70) angeformte Zähne (22, 24) aufweist, über die neben einem Kraftschluß ein Formschluß zwischen der Antriebswelle (10, 12) und dem Befestigungsteil (18) herstellbar ist, wobei die Höhe (32, 34) der Zähne (22, 24) über der Konusmantelfläche gleichbleibend ist.

6. Vorrichtung nach Anspruch 5, **dadurch gekennzeichnet, daß** die Zähne (22, 24) von im wesentlichen in Längsrichtung ausgerichteten Schneiden gebildet sind.

7. Vorrichtung nach Anspruch 5 oder 6, **dadurch gekennzeichnet, daß** der Abstand (28, 30) in Umfangsrichtung zwischen jeweils zwei Zähnen (22, 24) auf gleicher axialer Höhe an der Antriebswelle (10, 12) auf die Zugfestigkeit der verwendeten Materialien für die Antriebswelle (10, 12) und für das Befestigungsteil (18) abgestimmt ist und bei abnehmender Zugfestigkeit des Materials für das Befestigungsteil (18) relativ zur Zugfestigkeit des Materials für die Antriebswelle (10, 12) der Abstand (28, 30) zwischen den Zähnen (22, 24) zunimmt.

8. Vorrichtung nach einem der Ansprüche 5 bis 7, **dadurch gekennzeichnet, daß** die Höhe (32, 34) der Zähne (22, 24) auf die Zugfestigkeit der verwendeten Materialien für die Antriebswelle (10, 12) und für das Befestigungsteil (18) abgestimmt ist und bei abnehmender Zugfestigkeit des Materials für das Befestigungsteil (18) relativ zur Zugfestigkeit des Materials für die Antriebswelle (10, 12) die Höhe (32, 34) der Zähne (22, 24) zunimmt.

## Claims

1. Device for fixing a wiper arm (20) on a drive shaft (10, 12), with a fixing part (18) for the wiper arm (20), which fixing part has, at one end, a bearing (16) via which the fixing part (18) can be connected in a rotationally fixed manner to the output shaft (10, 12) via a nut (14) which can be screwed onto the drive shaft (10, 12), the nut (14) being connected to the fixing part (18) via a connection (26) which can be released during the installation of the wiper arm (20), **characterized in that** the nut (14) is formed by a component cast onto the fastening part (18).

2. Device according to Claim 1, **characterized in that**, in an installation position, the nut (14) is arranged above the bearing (16).

3. Device according to Claim 2, **characterized in that** the connection (26) between the end side of the nut (14), which side faces the fixing part (18), and the fixing part (18) is integrally formed.

4. Device according to Claim 3, **characterized in that** the connection (26) is formed by a thin-walled cylinder.

5. Device according to one of the preceding claims, **characterized in that** the fixing part (18) is mounted with the bearing (16) on an outer cone (70) of the drive shaft (10, 12) via an inner cone (72), and the drive shaft (10, 12) has teeth (22, 24) which are integrally formed on the outer cone (70) and via which, in addition to a frictional connection, a form-fitting connection between the drive shaft (10, 12) and the fixing part (18) can be produced, with the height (32, 34) of the teeth (22, 24) being constant over the circumferential surface of the cone.

6. Device according to Claim 5, **characterized in that** the teeth (22, 24) are formed by cutting edges oriented essentially in the longitudinal direction.

7. Device according to Claim 5 or 6, **characterized in that** the distance (28, 30) in the circumferential direction between two teeth (22, 24) in each case at the same axial height on the drive shaft (10, 12) is matched to the tensile strength of the materials used for the drive shaft (10, 12) and for the fixing part (18), and, with decreasing tensile strength of the material for the fixing part (18) relative to the tensile strength of the material for the drive shaft (10, 12), the distance (28, 30) between the teeth (22, 24) increases.

8. Device according to one of Claims 5 to 7, **characterized in that** the height (32, 34) of the teeth (22, 24) is matched to the tensile strength of the materials used for the drive shaft (10, 12) and for the fixing part (18), and, with decreasing tensile strength of the material for the fixing part (18) relative to the tensile strength of the material for the drive shaft (10, 12), the height (32, 34) of the teeth (22, 24) increases.

## Revendications

1. Dispositif de fixation d'un bras d'essuie-glace (20) sur un arbre d'entraînement (10, 12), comprenant pour le bras d'essuie-glace (20) un élément de fixation (18) dont une extrémité comporte un logement (16) permettant de relier solidaire en rotation l'élément de fixation (18) à l'arbre d'entraînement (10, 12) par un écrou (14) vissé sur celui-ci et relié à l'élément de fixation (18) par un raccord (26) amovible lors du montage du bras d'essuie-glace (20),
**caractérisé en ce que**
l'écrou (14) est formé par un composant rapporté par moulage à l'élément de fixation (18).

2. Dispositif selon la revendication 1,
**caractérisé en ce que**
l'écrou (14) est disposé dans une position de montage au-dessus du logement (16).

3. Dispositif selon la revendication 2,
**caractérisé en ce que**
le raccord (26) est rapporté entre la face frontale de l'écrou (14) orientée vers l'élément de fixation (18) et l'élément de fixation (18).

4. Dispositif selon la revendication 3,
**caractérisé en ce que**
le raccord (26) est formé par un cylindre à paroi mince.

5. Dispositif selon l'une quelconque des revendications précédentes,
**caractérisé en ce que**
l'élément de fixation (18) avec le logement (16) est logé par un cône intérieur (72) sur un cône extérieur (70) de l'arbre d'entraînement (10, 12) et ce dernier présente des dents (22, 24) rapportées au cône extérieur (70) qui permettent de réaliser outre une liaison de forces une liaison de formes entre l'arbre d'entraînement (10, 12) et l'élément de fixation (18), la hauteur (32, 34) des dents (22, 24) étant constante sur la surface enveloppe du cône.

6. Dispositif selon la revendication 5,
**caractérisé en ce que**
les dents (22, 24) sont formées par des taillants orientés pour l'essentiel dans la direction longitudinale.

7. Dispositif selon la revendication 5 ou 6,
**caractérisé en ce que**
la distance (28, 30) en direction circonférentielle entre respectivement deux dents (22, 24) sur un même plan axial sur l'arbre d'entraînement (10, 12) est fonction de la résistance à la traction des matériaux utilisés pour l'arbre d'entraînement (10, 12) et l'élément de fixation (18), et la distance (28, 30) entre les dents (22, 24) augmente avec la décroissance de la résistance à la traction du matériau pour l'élément de fixation (18)
par rapport à celle du matériau pour l'arbre d'entraînement (10, 12).

8. Dispositif selon l'une quelconque des revendications 5 à 7,
**caractérisé en ce que**
la hauteur (32, 34) des dents (22, 24) est fonction de la résistance à la traction des matériaux utilisés pour l'arbre d'entraînement (10, 12) et l'élément de fixation (18), et la hauteur (32, 34) des dents (22, 24) augmente avec la décroissance de la résistance à la traction du matériau pour l'élément de fixation (18) par rapport à celle du matériau pour l'arbre d'entraînement (10, 12).
